# EUROPÄISCHE PATENTSCHRIFT

(11) **EP 0 894 426 B1**
(45) Veröffentlichungstag und Bekanntmachung des Hinweises auf die Patenterteilung: **26.06.2002**
(21) Anmeldenummer: 98112929.9
(22) Anmeldetag: 11.07.1998
(51) Int. Cl.: A01C 5/06

(54) **Räumscheibe und Aufhängung einer Säeinheit mit einem Armzusammenbau und einem Furchenräumer mit wenigstens einer Räumscheibe**
Sweeperwheel and linkage of a seederattachement with bar linkage and seedboot with minimal one sweeperwheel
Disque de nettoyage et montage d'un soc semeur avec un système à bras et soc à disque comportant au moins un disque de nettoyage

(30) Priorität: 30.07.1997 US 902761; 06.11.1997 US 965205
(43) Veröffentlichungstag der Anmeldung: 03.02.1999
(73) Patentinhaber: DEERE & COMPANY, Moline, Illinois 61265-8098 (US)
(72) Erfinder: Lyle, Eugene, Stephens, Hampton, Illinois 61256 (US); Ignatz, Wendling, Bettendorf, Iowa 52722 (US)
(74) Vertreter: Magin, Ludwig Bernhard

(56) Entgegenhaltungen:
- DE-A- 19 544 199
- US-A- 5 255 617
- US-A- 5 461 995
- US-A- 5 477 792

## Beschreibung

Die Erfindung betrifft eine Aufhängung einer Säeinheit mit einem Arm, der an einem vorderen Endbereich an einen Werkzeugträger anschließbar und zur Aufnahme wenigstens eines Furchenöffners und eines Furchenräumers ausgebildet ist, mit einem Furchenräumer mit wenigstens einer Räumscheibe, einem Gestänge mit vertikal schwenkbaren Lenkern, das in seinem voreilenden Bereich an dem vorderen Endbereich des Arms angreift und in seinem nacheilenden Bereich wenigstens einer Räumscheibe des Furchenräumers drehbar aufnimmt.

Die US 5 255 617 A und die US 5 095 832 A offenbaren jeweils eine Sämaschine mit mehreren nebeneinander angeordneten Säeinheiten, die mittels eines Parallelogrammgestänges an einem Werkzeugträger vertikal schwenkbar angebracht sind. Jede Säeinheit enthält einen Furchenöffner und einen Furchenräumer, der vor dem Furchenöffner an dem Parallelogrammgestänge starr angebracht ist, wenn auch seine Anordnung geändert werden kann. Der Furchenräumer befindet sich relativ weit vor dem Furchenöffner und weist außenprofilierte Scheiben auf, die so angeordnet sind, daß sie den oberen Bereich des Bodens mit seinen Rückständen aus dem Weg des Furchenöffners schaben.

In der US 5 477 792 A ist eine Maschine zum Einbringen von Saatgut in den Erdboden beschrieben, bei der mehrere Säeinrichtungen an einem sich quer erstreckenden Werkzeugträger befestigt sind, der an der Dreipunktlagerung eines Traktors angebracht ist. Ein am Werkzeugträger befestigter Arm trägt in seinem rückwärtigen Bereich jeweils eine Säeinrichtung, die einen Furchenöffner umfasst, und in seinem vorderen Bereich einen durch Schwenken um eine horizontale und quer zur Fahrtrichtung verlaufende Achse vertikal beweglichen Furchenräumer in Form eines nach hinten divergierenden Scheibenpaares mit überstehenden Zähnen. Eine ähnliche Maschine ist in der US 5 461 995 A beschrieben, in der der Furchenräumer durch einen Parallelogrammlenker mit dem Arm verbunden ist. Bei diesen beiden Maschinen verändert sich bei unebenen Böden die räumliche Zuordnung von Furchenräumern und Furchenöffnern.

Das der Erfindung zugrunde liegende Problem wird darin gesehen, daß die Furchenräumer lose auf der Bodenoberfläche liegende Rückstände nicht unter allen Umständen aus der Spur räumen können, Erdreich wegräumen und beim Auftreffen auf Hindernisse das gesamte Gewicht der Säeinheit aufnehmen müssen.

Diese Probleme werden erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Diese Aufhängung verhindert zum einen, daß sich bei der Fahrt Rückstände vor der oder den Räumscheiben stauen, denn die Räumscheiben können entgegen der Bewegungsrichtung ausweichen, und zum anderen verlagert sie den Schwenkpunkt des Furchenräumers mit der Verlagerung des Armes, der auch den Furchenöffner trägt. Die Verwendung eines Vier-Lenker-Gestänges in Parallelogrammbauart stellt einen speziellen Fall eines Gestänges dar, mit dem die räumliche Beziehung zwischen dem Furchenräumer und dem Furchenöffner während des rauhen Betriebs auf dem Boden beibehalten werden kann; es wird jedoch darauf hingewiesen, daß es auf die Bemessung und Anordnung der Lenker an sich ankommt, d. h. daß gute Ergebnisse auch mit Lenkern erzielbar sind, die nicht in der Parallelogrammbauart ausgebildet sind.

Ein hervorragendes Arbeitsergebnis wird erzielt, wenn diese Aufhängung mit als ebene Scheibe ausgebildeten Räumscheiben bestückt wird, da dann eine gute Bodenführung und eine gute Materialbeseitigung stattfindet.

Infolge der Verwendung einer oder mehrerer ebener Räumscheiben wird erreicht, daß kein Erdreich erfaßt und hoch bzw. seitlich weggeworfen wird, und die profilierte Umfangskante stellt sicher, daß aus dem Weg zu räumende Rückstände erfaßt und aus der Spur bewegt werden.

Während einerseits Rückstände mittels vorhandener Zähne aggressiv erfaßt werden, verhindert deren geringe radiale Erstreckung jedoch, daß die Rückstände aufgespießt werden und zu Verstopfungen führen.

Desgleichen verhindern auch flache, seichte Zahnlücken, daß Rückstände zwischen den Zähnen eingeklemmt und mitgenommen werden.

Täler, deren Wände einer Kreislinie folgen, anstatt z. B. einer Keilform, tragen ebenfalls dazu bei, daß die Rückstände nicht derart eingeklemmt werden, daß sie nicht mehr entfallen können.

Eine vorteilhafte Bemessung der Zahntiefe, die unter normalen Umständen zum erwarteten Erfolg führt, wird bei einer Zahntiefe von 1,3 bis 2,6 cm gesehen.

Eine sehr brauchbare und herstellungstechnisch beherrschbare Zahnform ist die eines Kettenrades.

Ausreichende Stabilität gegen seitlich einwirkende Kräfte wird bei einer Räumscheibe erreicht, deren Dicke 6 bis 10 mm und/oder deren Durchmesser 20,32 bis 30,48 cm beträgt.

Die Verwendung von vier Lenkern für das Gestänge führt wenigstens im wesentlichen zu einem Parallelogramm, mit dem insbesondere geradlinige Bewegungsabläufe auf vielfältige Weise erreicht und festgelegt werden können.

Eine Teilevereinfachung und somit Kostenreduzierung wird dadurch erreicht, daß einer der Lenker gleichzeitig als eine Strebe ausgebildet ist, die wenigstens eine der Räumscheiben trägt; je nach den gegebenen Verhältnissen kann dieser Lenker über die Gelenkpunkte hinaus erstreckt werden und somit die Räumscheibe(n) an der gewünschten Stelle tragen, ohne die geradlinige Bewegung aufzugeben.

Die beanspruchte spreizende Ausrichtung und Anordnung zweier Räumscheiben führt dazu, daß die Rückstände eingangsseitig getrennt werden und evtl. noch verbliebene Rückstände von den Räumscheiben in deren Spreizbereich straff auf dem Boden gehalten werden, so daß sie sich nicht um Lager, Räumscheiben, Furchenöffner und dergleichen wickeln können.

Die Schaffung eines gedachten Schwenkmittelpunktes des Gestänges im Bereich des Furchenöffners und vorzugsweise nahe oder vor dessen Drehachse führt zu geringen Staukräften auf die Rückstände, so daß die Räumscheiben über diese hinwegrollen, anstatt sie vor sich herzuschieben.

Wenn sich die rückwärtige Kante wenigstens einer der Räumscheiben mit dem Furchenräumer deckt, d. h. hinter dessen voreilender Kante endet, werden die Rückstände in diesem Bereich fest auf dem Boden gehalten und können von der Schneidscheibe des Furchenöffners durchtrennt werden.

Eine einfache und robuste Anbringung des Gestänges an dem Arm wird durch die Verwendung eines zweischenkligen Halters erreicht, der das Gestänge in dem nach unten offenen Freiraum schwenkbar trägt.

Eine Räumscheibe, die vor einem Tiefenrad bewegt wird, sorgt nicht nur für eine geräumte Spur vor dem Furchenöffner mit der Konsequenz, daß das Saatgut in von Rückständen freies Erdreich abgelegt wird, sondern sorgt auch dafür, daß die Eindringtiefe des Furchenöffners nicht von umherliegenden Rückständen beeinflußt wird.

Die Anordnung eines Schwenklagers oberhalb des Armes hat den Vorteil, daß dadurch noch mehr Bewegungsfreiheit für den Furchenräumer unterhalb des Armes geschaffen wird.

Gute Räumeigenschaften der Räumscheiben werden erreicht, wenn Die Anordnung eines Schwenklagers oberhalb des Armes hat den Vorteil, daß dadurch noch mehr Bewegungsfreiheit für den Furchenräumer unterhalb des Armes geschaffen wird.

Gute Räumeigenschaften der Räumscheiben werden erreicht, wenn diese unter einem Winkel von 5 bis 40 Grad zu der Vorwärtsfahrtrichtung verlaufen.

Hingegen sorgt ein Winkel von 0 bis 35 Grad zu der Vertikalen dafür, daß Erdreich nicht hochgeworfen wird.

Reichlich Bewegungsfreiraum und geringes Gewicht des Gestänges wird erreicht, wenn dieses nur einfach ausgebildet und seitlich des Arms vorgesehen ist, wobei auftretende Seitenkräfte von Lagern aufgefangen werden, die sich aus der Ebene des Gestänges seitlich heraus erstrecken und eine große Lagerfläche bieten.

Die Halterung des Gestänges auf dem Arm wird stabiler, wenn es von Lagern zusammengehalten wird, die sich quer über den Arm und seitlich des Arms erstrecken.

In der Zeichnung sind zwei nachfolgend näher beschriebene Ausführungsbeispiele der Erfindung dargestellt. Es zeigt:
- Fig. 1: einen Furchenöffner und einen Furchenräumer nach einem ersten Ausführungsbeispiel in perspektivischer Ansicht von der Seite,
- Fig. 2: den Furchenräumer aus Figur 1 mit Räumscheiben in einer Ansicht, die deren Verengungsstelle zeigt,
- Fig. 3: den Furchenräumer aus Figur 2, in einer Ansicht, die deren gespreizte Stellung zeigt,
- Fig. 4: einen Furchenöffner mit einem Furchenräumer nach einem zweiten Ausführungsbeispiel in perspektivischer Ansicht von der Seite und von vorne,
- Fig. 5: einen Teil des Furchenräumers aus Figur 5 in perspektivischer Darstellung, wobei einige der in Figur 5 gezeigten Teile der Übersichtlichkeit wegen weggelassen worden sind,
- Fig. 6: den Furchenräumer aus Figur 4 in Seitenansicht,
- Fig. 7: den Furchenräumer aus Figur 4 in Vorderansicht, und
- Fig. 8: eine alternative Ausbildung eines Teils eines Gestänges des Furchenräumers nach den Figuren 4 und 5.

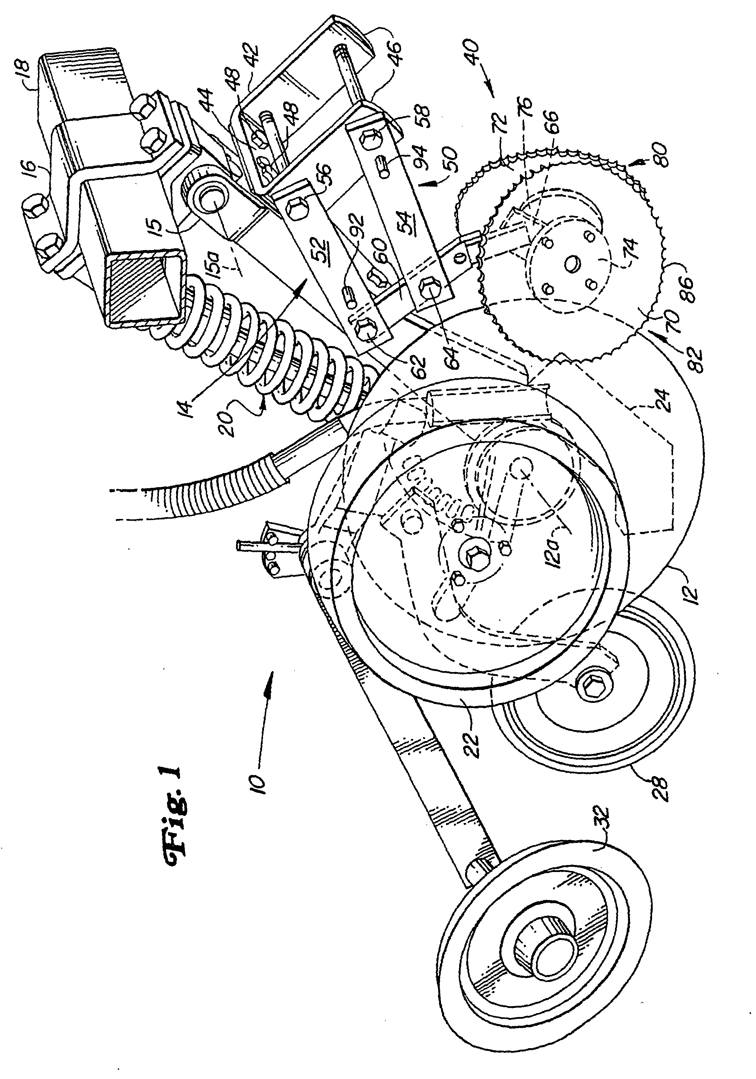

Es wird Bezug auf das in Figur 1 Gezeigte genommen, das einen Furchenöffnerzusammenbau 10 von einer Bauart zeigt, wie sie im Handel an den JOHN DEERE Modellen 750 No-Till Drill verfügbar ist. Der Furchenöffnerzusammenbau 10 enthält einen Furchenöffner 12, der als eine einzige Scheibe gezeigt ist, die von einem Arm 14 mit Bezug auf die Vorwärtsfahrtrichtung unter einem Winkel zur Drehung um eine Achse 12a getragen ist, und die eine Furche zur Aufnahme von Saatgut öffnet. Der Arm 14 enthält einen oberen, vorderen gegabelten Endbereich 15, der mittels eines Halters 16 an einen sich quer erstreckenden Werkzeugträger 18 schwenkbar angeschlossen ist, damit er um eine Querachse 15a schwenken kann. Ein Federzusammenbau 20, der zwischen den Halter 16 und einen unteren Endbereich des Arms 14 eingefügt ist, sorgt für eine nach unten gerichtete Vorspannung des Furchenöffners 12. Ein Tiefenrad 22, das nahe der voreilenden Seite des angestellten Furchenöffners 12 angeordnet ist, bestimmt die Eindringtiefe des Furchenöffners 12 und verdichtet die Furchenwand. Saatgut wird mittels eines Säschars 24, das von dem Arm 14 in dem Schattenbereich des Furchenöffners 12 getragen wird, in die Furche abgegeben. Ein Andrückrad 28, das von dem Arm 14 hinter dem Furchenöffner 12 getragen wird, trägt dazu bei, das Saatgut in den Boden auf den Grund der Furche zu drücken, um einen guten Saatgut-Boden-Kontakt zu erzielen. Ein Schließrad 32 löst Erdreich von der Furchenwand ab und drückt es gegen das Saatgut, ohne den Boden unmittelbar oberhalb des Saatguts zu verdichten.

Um Rückstände auf dem Boden aus dem schmalen Bereich vor dem Furchenöffner 12 zu räumen und um zu vermeiden, daß Rückstände in die Furche nahe zu dem Saatgut gedrückt werden, ist ein erfindungsgemäßer Furchenräumer 40 an den Furchenöffnerzusammenbau 10 angeschlossen. Der Furchenräumer 40 enthält einen U-förmigen Halter 42 mit einem Öffnungen enthaltenden Bügel 44, der im angebauten Zustand nach unten und vorne abgewinkelte Seitenteile 46 in der Form von Schenkeln miteinander verbindet. Schrauben 48, die sich durch ausgewählte Öffnungen in dem Bügel 44 und durch den oberen gegabelten Endbereich 15 des Arms 14 erstrecken, legen den Halter 42 an der Unterseite des Endbereichs 15 fest, damit dieser mit dem Arm 14 um die Querachse 15a schwenken kann. Einer der Seitenteile 46 ist in der Längsrichtung im wesentlichen an dem Furchenöffner 12 ausgerichtet und definiert den vorderen aufrechten Bereich eines als Vier-Lenker-Gestänge ausgebildeten Gestänges 50. Das Gestänge 50 umfaßt sich längs erstreckende obere und untere Lenker 52 und 54, deren vordere Endbereiche mittels Lagern 56, 58 in der Form drehbarer Wellen oder Schrauben schwenkbar an den gewählten Seitenteil 46 und deren rückwärtige Endbereiche mittels Schrauben 62 und 64 an eine aufrechte Strebe 60 angeschlossen sind. Die Lager 56 und 58 erstrecken sich durch gegenüberliegende Seitenteile 46, um die Verbindung in dem Gestänge 50 zu versteifen. Ein V-förmiger Scheibenträger 66 ist an den unteren Endbereich der Strebe 60 angeschlossen. Die Verbindung zwischen der aufrechten Strebe 60 und dem Scheibenträger 66 kann einstellbar ausgeführt werden, um den Winkel des Scheibenträgers 66 in bezug auf die Vertikale ändern zu können, und zwar dadurch, daß eine Anzahl von Ausnehmungen in die jeweiligen Elemente, insbesondere den Scheibenträger 66 und die Strebe 60, eingebracht und Schrauben durch die gewählten Ausnehmungen gesteckt und gesichert werden.

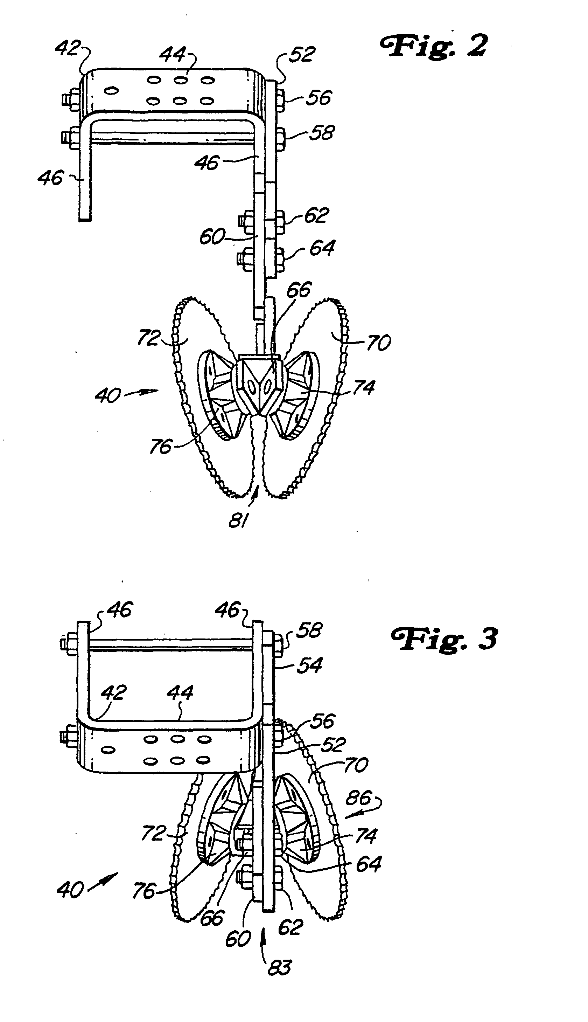

Flache Räumscheiben 70 und 72 sind mittels Lagern 74 und 76 an den V-förmigen Scheibenträger 66 zur Drehung um Achsen angebracht, die mit Bezug auf die Querrichtung nach unten und vorne abgewinkelt sind. Die Räumscheiben 70, 72 definieren eine untere, vordere, in Figur 2 allgemein dargestellte Verengungsstelle 81 und öffnen sich ausgehend von dieser Verengungsstelle 81 nach hinten zu einem erweiterten Räumbereich 83 - sh. Figur 3 -, indem die Rückstände weggeräumt bzw. gestreckt werden, und der sich nahe der Stelle befindet, an der der Umkreis des Furchenöffners 12 zuerst in den Boden eindringt - sh. Figur 1.

Die Lage der Verengungsstelle 81 kann für verschiedene Arbeitsbedingungen eingestellt werden, indem der Winkel des Scheibenträgers 66 in bezug auf die Vertikale verändert wird.

Während des Betriebs befinden sich die Räumscheiben 70, 72 auf gegenüberliegenden Seiten des Furchenräumers 12, wobei sich die rückwärtigen Enden der Räumscheiben 70, 72 hinter der vorderen Kante des Furchenöffners 12 befinden, sh. Figur 1. Wie dies dargestellt ist, treffen die Achsen der Räumscheiben 70, 72 unter einem Winkel von ca. 45 Grad aufeinander. Die Lager 74 und 76 sind auf den nachlaufenden oder Schattenseiten der Räumscheiben 70, 72 angeordnet, um die Lager 74, 76 vor Erdreich und Schmutz zu schützen.

Die Räumscheiben 70 und 72 haben vorzugsweise eine Größe von 25 cm im Durchmesser und besitzen einen gezahnten oder gewellten Umfang 86 mit einem flachen Zahnprofil, dessen Nischen oder Täler der Zähne von dem äußersten Zahnbereich um eine Entfernung radial nach innen ragen, die wesentlich weniger als 10 % des Durchmessers der Räumscheiben 70, 72 und im vorliegenden Ausführungsbeispiel 1,9 cm beträgt. Die Anordnung oder Ausbildung des Umfangs 86 reduziert das Eindringen in das Erdreich und dessen Auswurf, während es gute Reinigungs- und Streckeigenschaften in bezug auf die Rückstände erbringt. Rückstände, die nicht aus dem Weg der Räumscheiben 70, 72 nach außen geräumt werden, werden von dem Umfang 86 der Räumscheiben 70, 72 in einem Bereich nahe des Eindringens des Furchenöffners 12 stramm gehalten. Das Spannen der Rückstände an einer dem Furchenöffner 12 nahegelegenen Stelle versetzt den Furchenöffner 12 in die Lage, die Rückstände effektiver zu trennen und vermeidet das Verfangen und Wickelprobleme an dem Furchenöffner 12.

In gewissen Rückstands- und Arbeitsbedingungen, z. B., wenn der Furchenöffnerzusammenbau 10 unter relativ hoher Geschwindigkeit oberhalb von fünf Meilen pro Stunde arbeitet, ist nur eine der Scheiben 70 oder 72 erforderlich, um die Spur für den Furchenöffner 12 zu räumen. Für die in Figur 1 gezeigte Anordnung wird vorzugsweise die Räumscheibe 72, die zu dem Säschar 24 hin und von dem Tiefenrad 22 weg geneigt ist, benutzt, und die Räumscheibe 70 wird in einem Einzelradausführungsbeispiel entfernt, um auf die wirksamste Weise Rückstände in der Spur des Tiefenrads 22 zu vermeiden und dadurch die Tiefensteuerung zu optimieren.

Das Gestänge 50 ermöglicht es den Räumscheiben 70 und 72 sich in bezug auf den Werkzeugträger 18 und den Furchenöffner 12 zu bewegen, während es im allgemeinen eine vorgewählte Ausrichtung der Räumscheibe 70 bzw. 72 in bezug auf den Furchenöffner 12 beibehält, um die gleichmäßigen Rückständebeseitigungs- und Streckungseigenschaften unter rauhen Feldbedingungen beizubehalten, wie sie oft im Betrieb ohne vorherige oder mit geringer Bodenbearbeitung eintreten.

Das Gestänge 50 hält die Räumscheiben 70, 72 über einen weiten Bereich von Arbeitsbedingungen in unmittelbarer Nähe zu dem Furchenöffner 12, ohne daß es zu einer Berührung zwischen dem Furchenöffner 12 und den Räumscheiben 70, 72 kommt.

Wenn sich der Furchenöffner 12 und der Arm 14 vertikal über das rauhe Gelände bewegen, dreht sich der Halter 42 zusammen mit dem Arm 14 und bewegt die Räumscheiben 70 und 72 in einer Richtung, die die Bewegung des Furchenöffners 12 ausgleicht und hält die gewünschte Beziehung zwischen den Räumscheiben 70, 72 und dem Furchenöffner 12 bei. Zum Beispiel wird sich der Furchenöffner 12 in einem Bogen in bezug auf den Werkzeugträger 18 rückwärts bewegen, wenn der Furchenöffner 12 und der Arm 14 um die Querachse 15a nach oben schwenken. Zur gleichen Zeit wird als ein Ergebnis der Drehung des Halters 42 mit dem Arm 14 der untere Endbereich der aufrechten Strebe 60 nach hinten drehen, so daß die Verengungsstelle 81 und der Räumbereich 83 im wesentlichen in konstanter Beziehung in bezug auf den Eindringpunkt des Furchenöffners 12 gehalten werden. Vorzugsweise liegt die gedachte Mitte des Gestänges 50 auf oder sehr nahe der Achse 12a des Furchenöffners 12, um eine gute Führung zwischen dem Furchenöffner 12 und den Räumscheiben 70 und 72 zu erreichen, wobei unter der gedachten - virtuellen - Mitte die Stelle gemeint ist, an der sich die Achsen durch die Anlenkpunkte der Lenker 52, 54 schneiden.

Der U-förmige Halter 42 trägt das Gestänge 50 auf einer der Seiten des Arms 14, abhängig davon, ob der Furchenöffner 12 nach links oder rechts in bezug auf die Vorwärtsfahrtrichtung abgewinkelt ist, und ermöglicht ein Schwenken der Räumscheiben 70, 72 über einen weiten Bereich von Stellungen in bezug auf den Furchenöffner 12, ohne daß es zu einer Berührung zwischen den Räumscheiben 70, 72, dem Furchenöffner 12 und dem Arm 14 kommt. Die Räumscheiben 70, 72 führen den Furchenöffner 12 bzw. dessen Scheibe während des Betriebs sicher und sind dennoch frei, sich im rauhen Betrieb unabhängig von dem Furchenöffner 12 zu bewegen. Der oben beschriebene Zusammenbau verschafft auch ausreichend Freiraum, so daß die Räumscheiben 70, 72 in bezug auf den Werkzeugträger 18 in einer Außerbetriebsstellung oder für den Transport angehoben werden können. Wie es dargestellt ist, wird die nach unten gerichtete Kraft der Räumscheiben 70, 72 von dem Gewicht des Furchenräumers 40 aufgebracht, obwohl für harte und mit Rückständen beaufschlagte Bedingungen auch eine Federkraft aufgebracht werden kann, indem eine oder mehrere Spannfedern (nicht gezeigt) zwischen den Schrauben 58 und 62 und mit 92 und 94 bezeichneten Bolzenstellen hinzugefügt werden. Ein Anschlag gegen eine Bewegung nach unten kann ebenfalls zwischen den Lenkern 52, 54 vorgesehen werden, um das Schwenken des Furchenräumers 40 nach unten zu begrenzen.

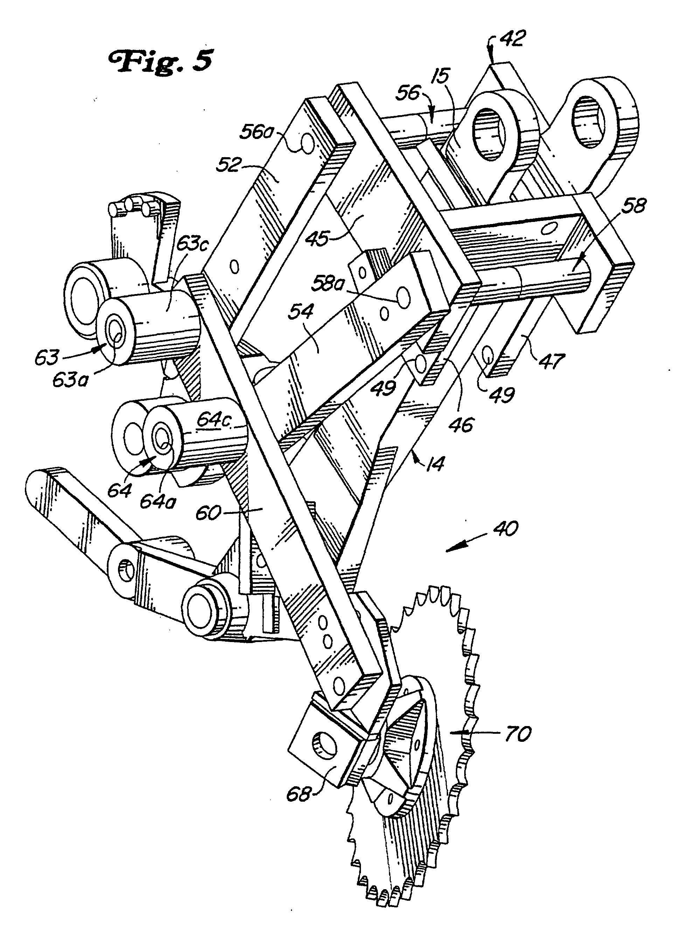

Es wird Bezug auf das in Figur 5 Gezeigte genommen, das einen Furchenöffnerzusammenbau 10 von einer Bauart zeigt, wie er bereits in Verbindung mit Figur 1 beschrieben worden ist.

Um Rückstände auf dem Boden aus dem schmalen Bereich vor dem Furchenöffner 12 zu räumen und um zu vermeiden, daß Rückstände in die Furche gedrückt werden, so daß Saatgut in schädlicher Weise auf Stroh oder dergleichen anstatt auf dem Boden abgelegt wird, ist ein Furchenräumer 40 an den Furchenöffnerzusammenbau 10 angeschlossen. Der Furchenöffner 40 enthält einen Halter 42 mit Seitenteilen 47, 45 und einen Seitenteil 46 in der Art einer mittig angeordneten Armanschlagplatte. Schrauben 48 (Fig. 1) erstrecken sich durch ausgewählte Öffnungen 49 in dem Seitenteil 47 und durch den Seitenteil 46, um den Halter 42 an dem Endbereich 15 festzulegen, damit dieser mit dem Arm 14 um die Querachse 15a schwenken kann. Der Halter 42 enthält einen oberen Bereich, der sich oberhalb des Arms 14 erstreckt, und einen unteren Bereich, der sich unterhalb des Arms 14 erstreckt. Der Seitenteil 45 erstreckt sich von dem Arm 14 aus in die Richtung der dem Tiefenrad 22 zugelegenen Seite des Furchenöffnerzusammenbaus 10 nach außen und ist in der Längsrichtung im wesentlichen an dem Furchenöffner 12 ausgerichtet. Der Seitenteil 45 definiert den vorderen aufrechten Bereich eines Gestänges 50. Das Gestänge 50 schließt sich längs erstreckende obere und untere Lenker 52 und 54 ein, deren vordere Endbereiche mittels als Büchsen ausgebildeter Lager 56, 58 schwenkbar an den Seitenteil 45 angeschlossen sind. Die Lager 56 und 58 erstrecken sich zwischen Seitenteilen 47, 45, um Lagerflächen zu bilden, die sich im wesentlichen in der Querrichtung erstrecken, um einen guten Widerstand gegen Abnutzung und Fressen zu bilden, wenn das Gestänge 50 schwere seitliche Lasten erfährt. Die Lager 56, 58 enthalten Schrauben 56b und 58b (Fig. 1), die die Lenker 52, 54 an die Lager 56, 58 für eine Schwenkbewegung um die Achsen der Schrauben 56b, 58b klemmen. Der vordere Endbereich des oberen Lenkers 52 schwenkt um eine Achse, die sich oberhalb des vorderen Endbereichs 15 befindet. Der untere Lenker 54 schwenkt um eine Achse direkt unterhalb des vorderen Endbereichs 15, und unter normalen Feldbedingungen (Fig. 1 und 2) befindet sich nur ein kleiner Teil des Gestänges 50 unterhalb des Arms 14, um die Rückstände gut zu beseitigen.

Eine aufrechte Strebe 60 ist mittels Schrauben 61 und 62 schwenkbar mit den Lenkern 52 und 54 verbunden, die sich durch quer verlaufende Lager 63 und 64 erstrecken, die selbst an die Strebe 60 angeschweißt sind. Hülsen 63a und 64a sind in Hülsen 63c und 64c drehbar aufgenommen. Die Schrauben 61, 62 erstrecken sich durch dicke Scheiben (Fig. 1), die die Hülsen 63a und 64a an die rückwärtigen Enden der betreffenden Lenker 52 und 54 andrücken. Die Hülsen 63a und 64a drehen mit den Lenkern 52 und 54 innerhalb der äußeren Hülsen 63c und 64c.

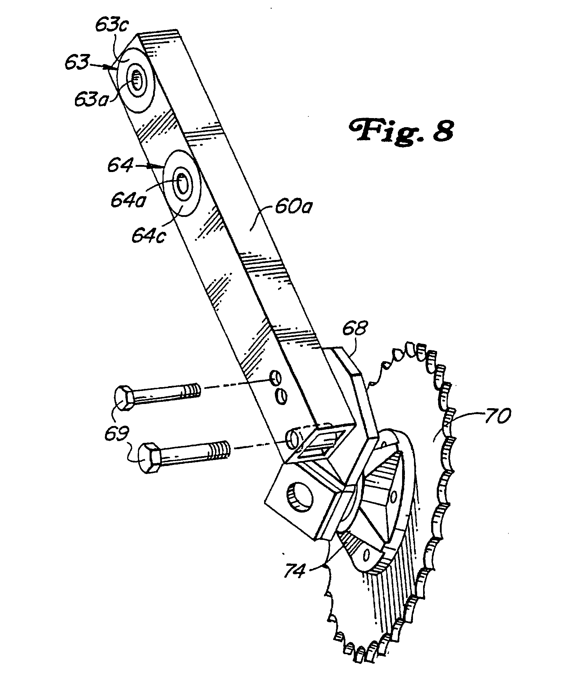

Wie es in Figur 2 gezeigt ist, befindet sich das Gestänge 50 im allgemeinen auf einer Seite einer sich längs erstreckenden Ebene, die durch den Furchenöffner 12 verläuft, und die Lager 63 und 64 erstrecken sich von der Ebene der Seiten der Lenker 52 und 54 nach außen, um eine seitliche Stütze für das Gestänge 50 zu bilden. Die sich seitlich erstreckenden Lagerflächen vergrößern die Lagerfläche, reduzieren das Fressen, das von den Seitenkräften hervorgerufen wird, und erhöhen die Standzeit des Gestänges 50. In einer alternativen Ausführungsform nach Figur 8 ist eine Strebe 60a als ein hohles rohrförmiges Teil von rechteckförmiger Gestalt ausgebildet, und die Lager 63 und 64 werden in den sich gegenüberliegenden Seitenwänden der rohrförmigen Strebe 60a gehalten.

Ein gewinkelter V-förmiger Scheibenträger 68 ist an dem unteren Endbereich der Strebe 60 oder 60a (Fig. 8) mittels Schrauben 69 einstellbar gehalten. Eine flache zahnradartige Räumscheibe 70 ist mittels eines Lagers 74 in Verbindung mit einer Nabe für eine Drehung um eine mit Blick auf die Querrichtung nach unten und vorne angestellte Achse an den Scheibenträger 66 angebracht. Das Gestänge 50 trägt die Räumscheibe 70 mit einem Drehmittelpunkt der Räumscheibe 70, der sich vor dem Furchenöffner 12 befindet. Der Scheibenträger 68 ist gegenüber der Strebe 60 einstellbar, um den Winkel der Räumscheibe 70 in bezug auf die Vorwärtsfahrtrichtung und die Vertikale zu verändern.

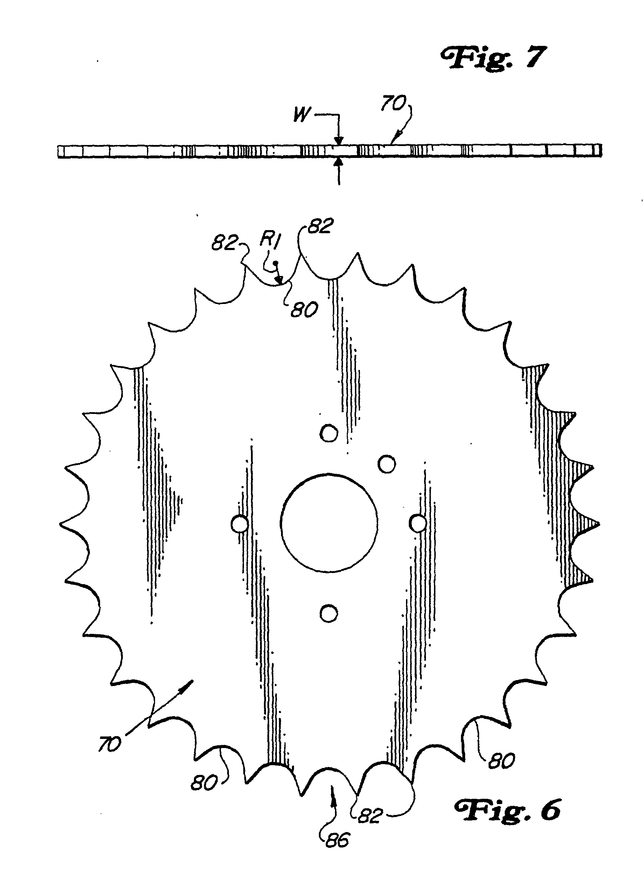

Die Räumscheibe 70 hat einen Durchmesser von ungefähr 20 bis 30 cm und hat, wie in Figur 6 zu sehen, einen Durchmesser von vorzugsweise 25 cm. Die Räumscheibe 70 hat einen gezahnten oder gewellten Umfang 86 mit einem seichten zahnrad- oder kettenradartigen Aussehen, das Talbereiche oder Täler 80 (Fig. 6) und spitze Zähne 82 aufweist, die sich von dem äußersten Ende der Zähne 82 um eine Strecke nach innen erstrecken, die im Bereich von 1,3 cm liegt. Die Täler 80 befinden sich auf dem Bogen eines Kreises mit einem Radius (R1) von ungefähr 1 cm, wobei dessen Zentrum zwischen den Zähnen 82 und ca. 0,3 cm radial nach innen von den Zahnspitzen gelegen ist. Die Dicke (wie in Fig. 7) der Räumscheibe 70 beträgt vorzugsweise 0,6 - 1,0 mm, um gute Verschleißeigenschaften und Tiefensteuerung zu erbringen, während eine effektive Einwirkung auf die Rückstände erhalten bleibt. Bei einem Durchmesser der Räumscheibe 70 von 25,4 cm sind ungefähr vierzig Zähne 82 gleichmäßig auf dem Umfang 86 verteilt.

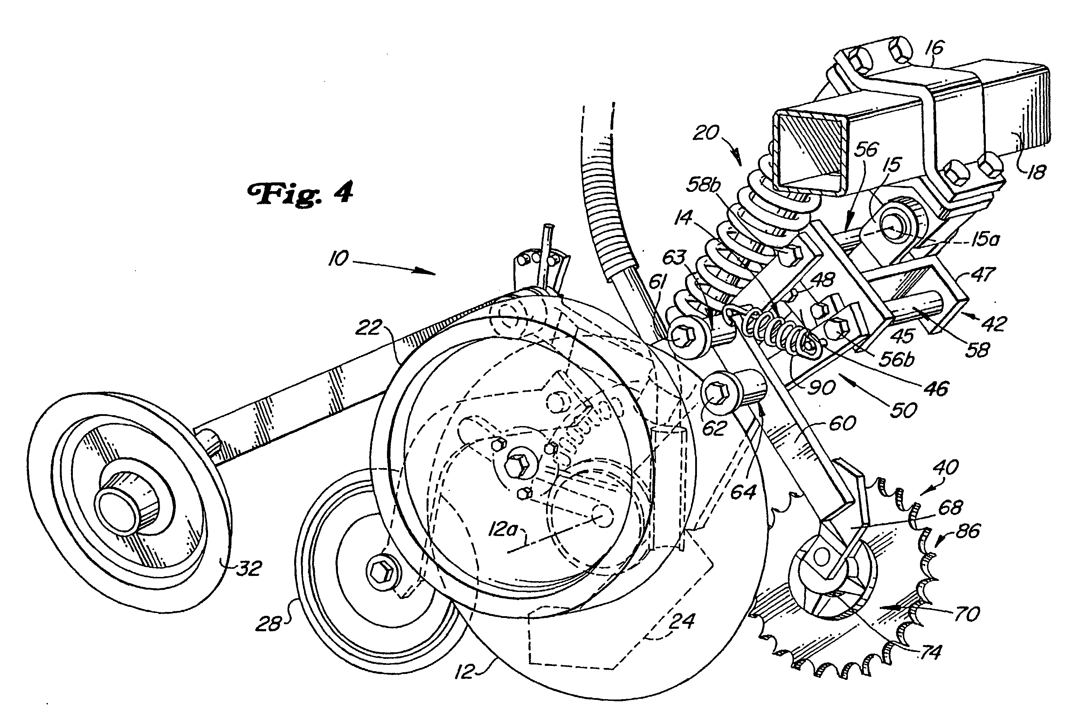

Die Anordnung oder Ausbildung des Umfangs 86 reduziert das Eindringen in das Erdreich und dessen Auswurf, während es gute Reinigungs- und Streckeigenschaften in bezug auf die Rückstände erbringt. Die flachen gerundeten Täler 80 zwischen den Zähnen 82 erfassen die Rückstände und verhindern deren Gleiten weg von dem Räumeinfluß der angestellten Räumscheibe 70. Die Zähne 82 dringen leicht in die Rückstände ein. Wie es in Figur 4 gezeigt ist, ist die Räumscheibe 70 zu dem Säschar 24 hin und von dem Tiefenrad 22 fort abgewinkelt, um so auf die effektivste Weise Rückstände in dem Pfad des Tiefenrads 22 zu vermeiden und eine optimale Tiefensteuerung zu erreichen. Die Neigung der Räumscheibe 70 liegt im Bereich von fünf bis vierzig Grad (vorzugsweise zweiundzwanzig Grad in der mittleren Betriebsstellung) mit Bezug auf eine Ebene in der Vorwärtsrichtung, um Rückstände von der Reihe bzw. Furche wegzubewegen, und im Bereich von Null bis fünfundreißig Grad (vorzugsweise oberhalb ungefähr zehn Grad und in der Größenordnung von siebzehn Grad in der Betriebsstellung) mit Bezug auf die Vertikale, um ein Hochwerfen von Unrat und Erdreich zu vermeiden und die Freiheit für die Bewegung in eine Transportstellung zu vergrößern.

Das Gestänge 50 ermöglicht es der Räumscheibe 70, sich in bezug auf den Werkzeugträger 18 und den Furchenöffner 12 zu bewegen, während es im allgemeinen eine vorgewählte Ausrichtung der Räumscheibe 70 in bezug auf den Furchenöffner 12 beibehält, um die gleichmäßigen Rückständeandrück- und Räumeigenschaften unter rauhen Feldbedingungen beizubehalten, wie sie oft im Betrieb ohne vorherige oder mit geringer Bodenbearbeitung eintreten. Das Gestänge 50 hält die Räumscheiben 70 über einen weiten Bereich von Arbeitsbedingungen in unmittelbarer Nähe zu dem Furchenöffner 12, ohne daß es zu einer Berührung zwischen dem Furchenöffner 12 und der Räumscheibe 70 kommt.

Wenn sich der Furchenöffner 12 und der Arm 14 vertikal über das rauhe Gelände bewegen, dreht sich der Halter 42 zusammen mit dem Arm 14 und bewegt die Räumscheibe 70 in einer Richtung, die die Bewegung des Furchenöffners 12 ausgleicht und hält die gewünschte Beziehung zwischen der Räumscheibe 70 und dem Furchenöffner 12 bei. Zum Beispiel wird sich der Furchenöffner 12 in einem Bogen in bezug auf den Werkzeugträger 18 rückwärts bewegen, wenn der Furchenöffner 12 und der Arm 14 um die Querachse 15a nach oben schwenken. Zur gleichen Zeit wird als ein Ergebnis der Drehung des Halters 42 mit dem Arm 14 der untere Endbereich der aufrechten Strebe 60 nach hinten drehen, so daß die Räumscheibe 70 im wesentlichen in konstanter Beziehung in bezug auf den Eindringpunkt des Furchenöffners 12 gehalten wird. Wie es gezeigt ist, liegt die gedachte - virtuelle - Mitte des Gestänges 50 während des Betriebs nahe vor der Achse 12a des Furchenöffners 12, um eine gute Führung zwischen dem Furchenöffner 12 und der Räumscheibe 70 zu erreichen, wobei unter der gedachten Mitte die Stelle gemeint ist, an der sich die Achsen durch die Anlenkpunkte der Lenker 52, 54 schneiden. Um eine übermäßige Belastung auf dem Gestänge 50 beim Auftreffen des Gestänges 50 auf ein Hindernis, wie einen Stein, zu reduzieren, sind die Lenker 52, 54 unter nahezu parallelen Bedingungen zu der gedachten Mitte vor der Achse 12a getragen, was sicherstellt, daß die Bewegung der Räumscheibe 70 über das Hindernis im wesentlichen vertikal mit einer geringen rückwärts gerichteten Komponente erfolgt, so daß die Räumscheibe 70 leicht über das Hindernis rollt. Da der wesentliche Teil des Gestänges 50 und der Seitenteil 47 oberhalb des Arms 14 gehalten werden, ist der Fluß der Rückstände optimiert und Stellen, an denen die Rückstände erfaßt werden und sich aufbauen können, werden minimiert. Der Winkel des Arms 14 in der Betriebsstellung beträgt zwischen zwanzig und sechzig Grad zu der Horizontalen und vorzugsweise ungefähr fünfundvierzig Grad. Vorzugsweise verlaufen unter normalen Betriebsbedingungen die Lenker 52 und 54 im wesentlichen parallel zu dem Arm 14.

Der Seitenteil 47 trägt das Gestänge 50 auf einer Seite des Arms 14 und ermöglicht ein Schwenken der Räumscheibe 70 über einen weiten Bereich von Stellungen in bezug auf den Furchenöffner 12, ohne daß es zu einer Berührung zwischen der Räumscheibe 70, dem Furchenöffner 12 und dem Arm 14 kommt. Die Räumscheibe 70 führt den Furchenöffner 12 bzw. dessen Scheibe während des Betriebs sicher und ist dennoch frei, sich im rauhen Betrieb unabhängig von dem Furchenöffner 12 zu bewegen. Der oben beschriebene Zusammenbau verschafft auch ausreichend Freiraum, so daß die Räumscheibe 70 in bezug auf den Werkzeugträger 18 in eine Außerbetriebsstellung oder für den Transport angehoben werden können, wobei der Winkel der Räumscheibe 70 in bezug auf die Vertikale zusätzlichen Freiraum schafft. Wie es in Figur 4 gezeigt ist, wird die nach unten gerichtete Kraft der Räumscheibe 70 von dem Gewicht des Furchenräumers 40 und der Kraft einer oder mehrerer hinzugefügter Federn 90 zwischen dem oberen und unteren Lenker 52, 54 aufgebracht. Wenn die Feder 90, so wie es dargestellt ist, zwischen dem oberen und unteren Lenker 52, 54 angebracht ist, wird eine relativ konstante Kraft über einen weiten vertikalen Schwenkbereich der Räumscheibe 70 beibehalten. Ein nicht gezeigter Anschlag gegen eine Bewegung nach unten begrenzt die Schwenkbewegung des Furchenräumers 40 nach unten auf eine Stellung, die sich im wesentlichen oberhalb der labilen Mittenlage (Totpunkt) befindet.

## Patentansprüche

1. Aufhängung einer Säeinheit mit einem Arm (14), der an einem vorderen Endbereich (15) an einen Werkzeugträger (18) anschließbar und zur Aufnahme wenigstens eines Furchenöffners (12) und eines Furchenräumers (40) ausgebildet ist, mit einem Furchenräumer (40) mit wenigstens einer Räumscheibe (70, 72), einem Gestänge (50) mit vertikal schwenkbaren Lenkern (52, 54), das in seinem voreilenden Bereich an dem vorderen Endbereich (15) des Arms (14) angreift und in seinem nacheilenden Bereich wenigstens einer Räumscheibe (70, 72) des Furchenräumers (40) drehbar aufnimmt, **dadurch gekennzeichnet, dass** der Arm (14) an einem vorderen Endbereich (15) mit einem Gelenk zum vertikal schwenkbaren Anschluß an dem Werkzeugträger (18) versehen ist, und dass die Anordnung und Bemessung der Lenker (52, 54) derart ist, daß die räumliche Zuordnung zwischen der wenigstens einen Räumscheibe (70, 72) und dem Furchenöffner (12) erhalten bleibt, wenn der Arm (14) über den unebenen Boden bewegt wird.

2. Aufhängung nach Anspruch 1, **dadurch gekennzeichnet, daß** das Gestänge (50) vier Lenker (45, 46, 52, 54, 60) enthält.

3. Aufhängung nach Anspruch 2, **dadurch gekennzeichnet, daß** der Lenker (60) an dem nacheilenden Bereich als Strebe (60) zur Aufnahme einer oder mehrerer Räumscheiben (70, 72) ausgebildet ist.

4. Aufhängung nach einem oder mehreren der vorherigen Ansprüche, **dadurch gekennzeichnet, daß** zwei Räumscheiben (70, 72) derart spreizend angeordnet sind, daß ihre voreilenden Kanten einander zugelegen und die nachlaufenden Kanten einander abgelegen sind, wobei der Furchenöffner (12) in den zwischen beiden Räumscheiben (70, 72) gebildeten Spreizbereich eindringt.

5. Aufhängung nach einem oder mehreren der vorherigen Ansprüche, **dadurch gekennzeichnet, daß** zwei sich rückwärtig erstreckende obere und untere konvergierende Lenker (52, 54) in ihrem Schnittpunkt einen gedachten Mittelpunkt definieren, der nahe des Furchenöffners (12) und insbesondere nahe von oder vor dessen Drehachse gelegen ist.

6. Aufhängung nach einem oder mehreren der vorherigen Ansprüche, **dadurch gekennzeichnet, daß** die nachlaufende Kante wenigstens einer Räumscheibe (70, 72) den Furchenöffner (12) seitlich überdeckt.

7. Aufhängung nach einem oder mehreren der vorherigen Ansprüche, **dadurch gekennzeichnet, daß** zwei rückwärtig divergierend verlaufende Räumscheiben (70, 72) mit einer voreilenden Verengungsstelle im Bodeneintrittsbereich und einem nachlaufenden Spreizbereich vorhanden sind.

8. Aufhängung nach einem oder mehreren der vorherigen Ansprüche, **gekennzeichnet durch** einen Halter (42), der an dem vorderen Endbereich (15) des Arms (14) angebracht ist und sich nach unten erstreckende schenkelartige Seitenteile (46) aufweist, an denen vordere Endbereiche oberer und unterer Lenker (52, 54) vertikal schwenkbar angreifen, während deren rückwärtige Endbereiche an der Strebe (60) vertikal schwenkbar angreifen.

9. Aufhängung nach einem oder mehreren der vorherigen Ansprüche, **dadurch gekennzeichnet, daß** bei nur einer Räumscheibe (70, 72) diese im Bereich vor einem Tiefenrad (22) angebracht ist.

10. Aufhängung nach einem oder mehreren der vorherigen Ansprüche, **dadurch gekennzeichnet, daß** wenigstens ein Schwenklager eines Lenkers (52) oberhalb des Arms (14) angeordnet ist.

11. Aufhängung nach einem oder mehreren der vorherigen Ansprüche, **dadurch gekennzeichnet, daß** sich die wesentliche Fläche der Räumscheibe (70) unter einem Winkel von 5 bis 40 Grad zu der Vorwärtsfahrtrichtung erstreckt.

12. Aufhängung nach einem oder mehreren der vorherigen Ansprüche, **dadurch gekennzeichnet, daß** sich die wesentliche Fläche der Räumscheibe (70) unter einem Winkel von 0 bis 35 Grad zu der Vertikalen erstreckt.

13. Aufhängung nach einem oder mehreren der vorherigen Ansprüche, **dadurch gekennzeichnet, daß** sich das Gestänge (50) seitlich einer Längsebene erstreckt und Lager (63) enthält, die sich quer zu der Längsebene erstrecken.

14. Aufhängung nach einem oder mehreren der vorherigen Ansprüche, **dadurch gekennzeichnet, daß** das Gestänge (50) von Lagern (56, 58) zusammengehalten wird, die sich quer über den Arm (14) und seitlich des Arms (14) erstrecken.

## Claims

1. A suspension of a seeder unit with an arm (14) which can be connected at a front end region (15) to a tool carrier (18) and which is designed to receive at least one furrow opener (12) and a furrow cleaner (40), with a furrow cleaner (40) having at least one clearing disc (70, 72), a linkage (50) with vertically pivotal links (52, 54), which engages in its leading region on the front end region (15) of the arm (14) and in its trailing region receives at least one clearing disc (70, 72) of the furrow cleaner (40), **characterized in that** the arm (14) is provided at its front end region (15) with a joint for vertically pivotal attachment to the tool carrier (18) and **in that** the arrangement and dimensions of the links (52, 54) are such that the spatial relationship between the at least one clearing disc (70, 72) and the furrow opener (12) is maintained when the arm (14) is moved by the uneven ground.

2. A suspension according to claim 1, **characterized in that** the linkage (50) comprises four links (45, 46, 52, 54, 60).

3. A suspension according to claim 2, **characterized in that** the link (60) at the trailing region is formed as a strut (60) for receiving one or more clearing discs (70, 72).

4. A suspension according to one or more of the preceding claims, **characterized in that** two clearing discs (70, 72) are so arranged in spreading fashion that their leading edges lie close to one another and the trailing edges are spaced from one another, while the furrow opener (12) penetrates into the spread region formed between the two clearing discs (70, 72).

5. A suspension according to one or more of the preceding claims, **characterized in that** two rearwardly extending and converging upper and lower links (52, 54) define a conceptual centre point at their intersection which is located near to the furrow opener (12) and in particular near to or in front of its axis of rotation.

6. A suspension according to one or more of the preceding claims, **characterized in that** the trailing edge of at least one clearing disc (70, 72) overlaps the furrow opener (12) at the side.

7. A suspension according to one or more of the preceding claims, **characterized in that** two tearwardly divergent clearing discs (70, 72) are provided with a leading narrow point in the region of ground entry and a trailing spreading region.

8. A suspension according to one or more of the preceding claims, **characterized by** a bracket (42) which is fitted on the front end region (15) of the arm (14) and has arm-like side parts (46) which extend downwards and on which front end regions of upper and lower links (52, 54) engage so as to pivot vertically, while their rear end regions engage the strut (60) so as to pivot vertically.

9. A suspension according to one or more of the preceding claims, **characterized in that**, in the case of only one clearing disc (70, 72), this is fitted in the region ahead of a depth wheel (22).

10. A suspension according to one or more of the preceding claims, **characterized in that** at least one pivot bearing of a link (52) is arranged above the arm (14).

11. A suspension according to one or more of the preceding claims, **characterized in that** the major surface of the clearing disc (70) extends at an angle of 5 to 40 degrees to the direction of forward travel.

12. A suspension according to one or more of the preceding claims, **characterized in that** the major surface of the clearing disc (70) extends at an angle of 0 to 35 degrees to the vertical.

13. A suspension according to one or more of the preceding claims, **characterized in that** the linkage (50) extends to the side of a longitudinal plane and has bearings (63) which extend transverse to the longitudinal plane.

14. A suspension according to one or more of the preceding claims, **characterized in that** the linkage (50) is held together by bearings (56, 58) which extend transversely over the arm (14) and at the side of the arm (14).

## Revendications

1. Attelage pour un élément semeur, comprenant un bras (14), dont une zone d'extrémité avant (15) peut être assemblée à un porte-outils (18) et qui est conçu pour recevoir au moins un traceur de sillons (12) et un dispositif de deblayement des sillons (40), comprenant un dispositif de deblayement des sillons (40) muni d'au moins un disque niveleur (70, 72), un tringlage (50) avec des bielles (52, 54) susceptibles de pivoter verticalement, dont la partie antérieure entre en prise avec la zone d'extrémité avant (15) du bras (14) et dans la partie postérieure duquel est logé de manière à pouvoir tourner au moins un disque niveleur (70, 72) du dispositif de deblayement des sillons (40), **caractérisé en ce que** le bras (14) est muni dans sa zone d'extrémité avant (15) d'une articulation pour un assemblage pivotant verticalement contre le porte-outils (18), et **en ce que** la structure et la dimension des bielles (52, 54) sont définies de telle sorte que la disposition dans l'espace entre le disque niveleur (70, 72), au moins au nombre d'un, et le traceur (12) est maintenue lorsque le bras (14) se déplace au-dessus du sol irrégulier.

2. Attelage selon la revendication 1, **caractérisé en ce que** le tringlage (50) comporte quatre bielles (45, 46, 52, 54, 60).

3. Attelage selon la revendication 2, **caractérisé en ce que** la bielle (60) dans la partie postérieure est, conçue sous forme d'entretoise (60) destinée à recevoir un ou plusieurs disques niveleurs (70, 72).

4. Attelage selon une ou plusieurs des revendications précédentes, **caractérisé en ce que** deux disques niveleurs (70, 72) sont disposés en s'écartant l'un de l'autre, de telle sorte que leurs bords avant sont orientés l'un vers l'autre et les bords arrière sont écartés l'un de l'autre, sachant que le traceur (12) pénètre dans la zone d'écartement formée entre les deux disques niveleurs (70, 72).

5. Attelage selon une ou plusieurs des revendications précédentes, **caractérisé en ce que** deux bielles supérieure et inférieure (52, 54) convergentes qui, s'étendant à l'arrière, définissent à leur point d'intersection un centre imaginaire, qui est situé à proximité du traceur (12) et en particulier à proximité de l'axe de rotation ou en amont de celui-ci.

6. Attelage selon une ou plusieurs des revendications précédentes, **caractérisé en ce que** le bord arrière d'au moins un disque niveleur (70, 72) couvre latéralement le traceur (12).

7. Attelage selon une ou plusieurs des revendications précédentes, **caractérisé en ce qu'**il est prévu deux disques niveleurs (70, 72) divergents vers l'arrière, avec une zone rétrécie avant dans la zone de pénétration dans le sol et une zone d'écartement arrière.

8. Attelage selon une ou plusieurs des revendications précédentes, **caractérisé par** un support (42), qui est assemblé contre la zone d'extrémité avant (15) du, bras (14) et qui comporte des parties latérales (46) formant des branches, dirigées vers le bas et sur les extrémités avant desquelles entrent en prise une bielle supérieure (52) et une bielle inférieure (54), de manière à pouvoir pivoter verticalement, alors que les extrémités arrière de celles-ci entrent en prise de manière à pouvoir pivoter verticalement avec l'entretoise (60).

9. Attelage selon une ou plusieurs des revendications précédentes, **caractérisé en ce que**, en présence d'un seul disque niveleur (70, 72), celui-ci est monté dans la zone en amont d'une roue de jauge (22).

10. Attelage selon une ou plusieurs des revendications précédentes, **caractérisé en ce qu'**au moins un coussinet de pivotement d'une bielle (52) est disposé au-dessus du bras (14).

11. Attelage selon une ou plusieurs des revendications précédentes, **caractérisé en ce que** la surface principale du disque niveleur (70) s'étend en formant un angle de 5 à 40 degrés par rapport au sens de marche avant.

12. Attelage selon une ou plusieurs des revendications précédentes, **caractérisé en ce que** la surface principale du disque niveleur (70) s'étend en formant un angle de 0 à 35 degrés avec la verticale.

13. Attelage selon une ou plusieurs des revendications précédentes, **caractérisé en ce que** le tringlage (50) s'étend latéralement à un plan longitudinal et comporte des paliers (63) qui s'étendent transversalement au plan longitudinal.

14. Attelage selon une, ou plusieurs des revendications précédentes, **caractérisé en ce que** le tringlage (50) est maintenu par des paliers (56, 58) qui s'étendent transversalement au-dessus du bras (14) et latéralement au bras (14).
